# EUROPÄISCHE PATENTSCHRIFT

(11) **EP 0 385 330 B1**
(45) Veröffentlichungstag und Bekanntmachung des Hinweises auf die Patenterteilung: **17.05.1995**
(21) Anmeldenummer: 90103667.3
(22) Anmeldetag: 26.02.1990
(51) Int. Cl.: C09B 67/22, C09D 11/02

(54) **Farbmittelmischungen, enthaltend Azoverbindungen auf Basis von Phenyloxdiazolylanilin**
Mixtures of dyestuffs comprising azo compounds on the basis of phenylox diazolyl aniline
Mélanges de matières colorantes comprenant des composés azoiques à base de phényloxadiazolylaniline

(30) Priorität: 02.03.1989 DE 3906525
(43) Veröffentlichungstag der Anmeldung: 05.09.1990
(73) Patentinhaber: BASF Aktiengesellschaft, 67063 Ludwigshafen (DE)
(72) Erfinder: Colberg, Horst, Dr., D-6700 Ludwigshafen (DE); Jesse, Joachim, Dr., D-6714 Weisenheim (DE)

(56) Entgegenhaltungen:
- DE-A- 2 721 955

## Beschreibung

Die vorliegende Erfindung betrifft neue Farbmlttelmischungen, enthaltend ein Pigment der Formel I 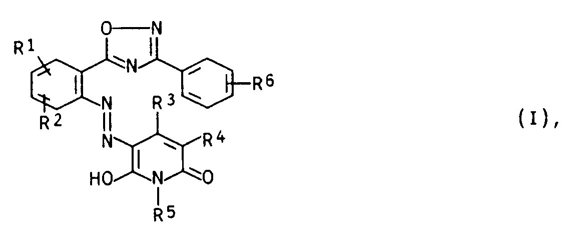
in der
- R¹: Wasserstoff, Halogen, C₁-C₄-Alkyl, C₁-C₄-Alkoxy, Trifluormethyl oder Nitro,
- R²: Wasserstoff, Halogen oder Nitro,
- R³: Wasserstoff oder C₁-C₄-Alkyl,
- R⁴: Cyano, Carbamoyl oder Acetyl,
- R⁵: Wasserstoff, C₁-C₁₀-Alkyl, das gegebenenfalls durch Hydroxy substituiert und/oder durch ein oder zwei Sauerstoffatome unterbrochen ist, oder C₅-C₇-Cycloalkyl und
- R⁶: Wasserstoff, Halogen, C₁-C₄-Alkyl, C₁-C₄-Alkoxy oder Nitro bedeuten, und
einen basischen Farbstoff der Formel II 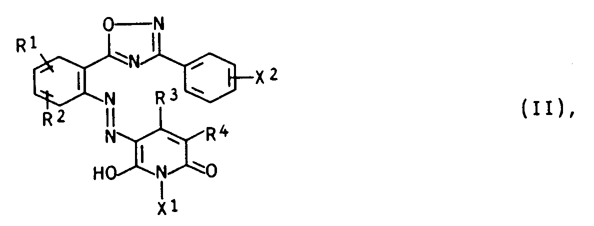
in der
- R¹, R², R³ und R⁴: jeweils die obengenannte Bedeutung besitzen und
- X¹: Wasserstoff, C₁-C₁₀-Alkyl, das gegebenenfalls durch Hydroxy substituiert und/oder durch ein oder zwei Sauerstoffatome unterbrochen ist, C₅-C₇-Cycloalkyl oder den Rest L-A, in dem L für geradkettiges oder verzweigtes C₁-C₆-Alkylen und A für einen aminogruppenhaltigen Rest stehen, und
- X²: Wasserstoff, Halogen, C₁-C₄-Alkyl, C₁-C₄-Alkoxy, Nitro oder den Rest L-A, in dem L und A jeweils die obengenannte Bedeutung besitzen, bedeuten,
mit der Maßgabe, daß mindestens einer der beiden Reste X¹ und X² für den Rest L-A steht.

Aus der DE-A-2 457 687 sind bereits Pigmente der Formel I bekannt, die u.a. auch für die Anwendung in Druckfarben in Betracht kommen. Da die Pigmente jedoch nicht immer in der für den speziellen Verwendungszweck optimalen physikalischen Form anfallen, wird dort weiterhin darauf hingewiesen, daß man sie durch an sich bekannte Methoden, wie Salzvermahlung, Erhitzen in Wasser oder Lösungsmitteln, in die jeweils geeignetste Form überführen kann.

Es hat sich allerdings gezeigt, daß die Farbstärke eines solchermaßen durch Erhitzen in Wasser nachbehandelten Pigments nicht in allen Anwendungsgebieten befriedigend ist.

Weiterhin zeigte sich, daß beispielsweise ein solchermaßen nachbehandeltes Pigment eine ungenügende Dispergierbarkeit bei seiner Anwendung in Offsetfarben aufweist. Dies erkennt man insbesondere an der schlechten Körnigkeitsentwicklung und am ungünstigen Aufbauverhalten bei der Dreiwalzenstuhlanreibung. Eine nach bekannter Weise durchgeführte Belegung des Pigments mit Harzen oder Resinaten zur Verbesserung der Dispergierbarkeit liefert jedoch Pigmentzubereitungen, die farbschwächer sind als das unbelegte Pigment.

Aufgabe der vorliegenden Erfindung war es nun, neue Farbmittel bereitzustellen, die diese Nachteile nicht mehr aufweisen.

Demgemäß wurden die oben näher bezeichneten Farbmittel, enthaltend ein Pigment der Formel I und einen basischen Farbstoff der Formel II, gefunden.

Die basischen Farbstoffe der Formel II sind aus der DE-A 2 721 955 bekannt. Dort wird auch erwähnt, daß sich diese Verbindungen zur Verbesserung des Fließverhaltens von Pigmenten eignen. Weitere Angaben werden nicht gemacht.

Es war nun überraschend, daß man durch Zusatz der basischen Farbstoffe II zu den speziellen Pigmenten I zu Farbmittelmischungen gelangt, deren Farbstärke höher ist, als die eines Pigments der Formel I allein.

Alle in den obengenannten Formeln I und II auftretenden Alkylgruppen können sowohl geradkettig als auch verzweigt sein.

Reste R¹, R³, R⁵, R⁶, X¹ und X² sind z.B. Methyl, Ethyl, Propyl, Isopropyl, Butyl, Isobutyl oder sec-Butyl.

Reste R¹, R², R⁶ und X² sind weiterhin z.B. Fluor, Chlor oder Brom.

Reste R¹, R⁶ und X² sind weiterhin z.B. Methoxy, Ethoxy, Propoxy, Isopropoxy, Butoxy, Isobutoxy oder sec-Butoxy.

Reste R⁵ und X¹ sind weiterhin z.B. Pentyl, Isopentyl, Neopentyl, tert-Pentyl, Hexyl, Heptyl, Octyl, 2-Ethylhexyl, Nonyl, Decyl, 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Ethoxyethyl, 2- oder 3-Ethoxypropyl, 2- oder 4-Ethoxybutyl, 2-Propoxyethyl, 2- oder 3-Propoxypropyl, 2- oder 4-Propoxybutyl, 2-Isopropoxyethyl, 2- oder 3-Isopropoxypropyl, 2- oder 4-Isopropoxybutyl, 2-(2-Ethylhexyloxy)ethyl, 3,6-Dioxaheptyl, 3,6-Dioxaoctyl, Cyclopentyl, Cyclohexyl oder Cycloheptyl.

Reste L sind z.B. -CH₂-, -(CH₂)₂-, -(CH₂)₃-, -(CH₂)₄-, -(CH₂)₅-, -(CH₂)₆-, -CH(CH₃)-CH₂- oder -CH(CH₃)-CH(CH₃)-.

Reste A gehorchen beispielsweise der Formel 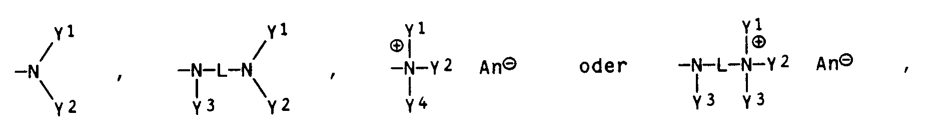
wobei
- L: die obengenannte Bedeutung besitzt und
- Y¹, Y² und Y³: gleich oder verschieden sind und unabhängig voneinander jeweils Wasserstoff, C₁-C₁₀-Alkyl, das gegebenenfalls durch Hydroxy substituiert und/oder durch ein oder zwei Sauerstoffatome unterbrochen ist, Benzyl, C₅-C₇-Cycloalkyl oder gegebenenfalls durch C₁-C₄-Alkyl, C₁-C₄-Alkoxy oder Halogen substituiertes Phenyl,
- Y⁴: Wasserstoff, C₁-C₁₀-Alkyl, das gegebenenfalls durch Hydroxy substituiert und/oder durch ein oder zwei Sauerstoffatome unterbrochen ist, Benzyl oder C₅-C₇-Cycloalkyl und
An^{⊖} ein Anion bedeuten, oder wobei der Rest 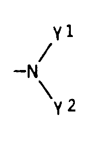
für einen 5- bis 7-gliedrigen heterocyclischen Rest steht.

Anionen An^{⊖} sind z.B. Halogenid, wie Fluorid, Chorid, Bromid oder Iodid, Hydrogensulfat, Sulfat, Hydrogenphosphat, Phosphat, Borat, Tetrafluoroborat, Trichlorozinkat, Methosulfat, Ethosulfat, Benzolsulfonat, o- oder p-Toluolsulfonat, Methylsulfonat, Formiat, Acetat, Propionat oder Hydroxyacetat.

Reste A sind im einzelnen z.B. Amino, Mono- oder Dimethylamino, Mono-oder Diethylamino, Mono- oder Dipropylamino, Mono- oder Diisopropylamino, Mono- oder Dibutylamino, Mono- oder Dipentylamino, Mono- oder Dihexylamino, Mono- oder Diheptylamino, Mono- oder Dioctylamino, Mono- oder Di(2-ethylhexyl)amino, Mono- oder Dinonylamino, Mono- oder Didecylamino, Mono- oder Dibenzylamino, N-Methyl-N-benzylamino, N-Ethyl-N-benzylamino, Phenylamino, 4-Methylphenylamino, 4-Methoxyphenylamino, 4-Chlorphenylamino, N-Methyl-N-phenylamino, Cyclopentylamino, Cyclohexylamino, Cycloheptylamino, Mono- oder Bis(2-Hydroxyethyl)amino, Mono- oder Bis(2-Methoxyethyl)amino, Mono- oder Bis(2-Ethoxyethyl)amino, Mono- oder Bis(2- oder 3-Hydroxypropyl)amino, Mono- oder Bis (2- oder 3-Methoxypropyl)amino, Mono- oder Bis(2- oder 3-Ethoxypropyl)amino, N-Methyl-N-(2-hydroxyethyl)amino, N-Methyl-N-(2- oder 3-hydroxypropyl)amino, Pyrrolidino, Piperidino, Morpholino, Thiomorpholino, Piperazino, N-(C₁-C₄-Alkyl)piperazino, Hexamethylenimino oder die entsprechend quartären Verbindungen, die z.B. noch ein zusätzliches Wasserstoffatom oder einen zusätzlichen C₁-C₄-Alkyl-, Benzyl-, 2-Hydroxyethyl- oder 2- oder 3-Hydroxypropylrest aufweisen.

Reste A sind weiterhin z.B.
NH-C₂H₄-NH₂, NH-C₂H₄-NHCH₃, NH-C₂H₄-N(CH₃)₂, NH-C₂H₄-NHC₂H₅, NH-C₂H₄-N(C₂H₅)₂, NH-C₃H₆-NH₂, NH-C₃H₆-NHCH₃, NH-C₃H₆-N(CH₃)₂, NH-C₃H₆-NHC₂H₅, NH-C₃H₆-N(C₂H₅)₂, NH-C₄H₈-NH₂, NH-C₄H₈-NHCH₃, NH-C₄H₈-N(CH₃)₂, NH-C₄H₈-NHC₂H₅, NH-C₄H₈-N(C₂H₅)₂, NH-C₂H₄-NHC₂H₄OH, NH-C₂H₄-N(C₂H₄OH)₂, 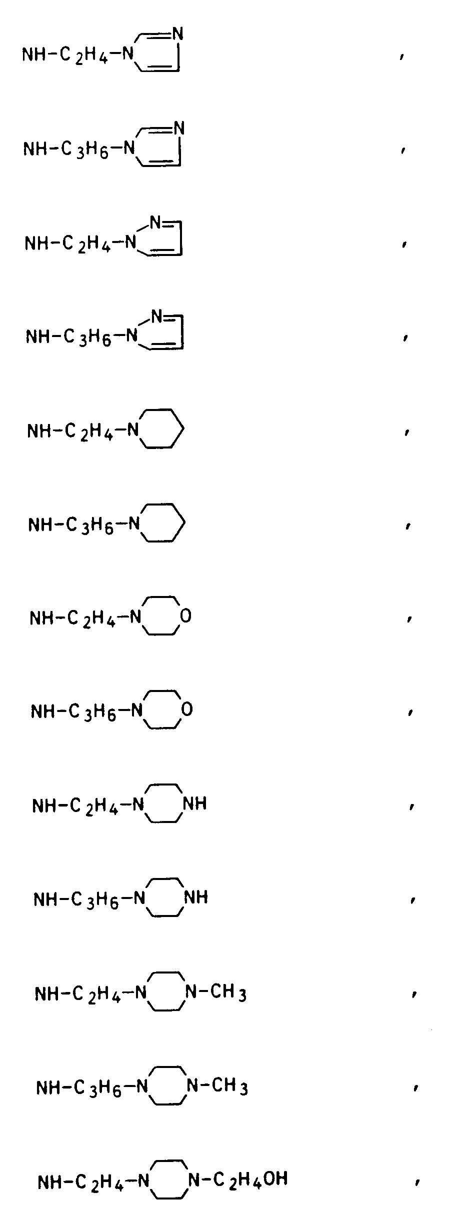 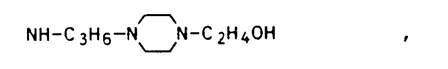
oder die entsprechend quartären Verbindungen, die z.B. noch ein zusätzliches Wasserstoffatom oder einen zusätzlichen C₁-C₄-Alkyl-, Benzyl-, 2-Hydroxyethyl- oder 2- oder 3-Hydroxypropylrest aufweisen.

Bevorzugt sind Farbmittelmischungen, enthaltend ein Pigment der Formel I und einen basischen Farbstoff der Formel II, wobei jeweils in Formel I und Formel II
- R¹: Wasserstoff, Chlor, Brom, Methyl, Methoxy, Trifluormethyl oder Nitro,
- R²: Wasserstoff, Chlor, Brom oder Nitro,
- R³: Wasserstoff oder C₁-C₃-Alkyl und
- R⁴: Cyano, Carbamoyl oder Acetyl bedeuten, und
weiterhin in Formel I
- R⁵: Wasserstoff, C₁-C₄-Alkyl oder C₅-C₇-Cycloalkyl und
- R⁶: Wasserstoff, Chlor, Brom, Methyl, Methoxy oder Nitro, und in Formel II
- X¹: Wasserstoff, C₁-C₄-Alkyl oder den Rest L-A und
- X²: Wasserstoff, Chlor, Brom, Methyl, Methoxy, Nitro oder den Rest L-A bedeuten, wobei L und A jeweils die obengenannte Bedeutung besitzen.
Insbesondere bevorzugt sind Farbmittelmischungen, enthaltend ein Pigment der Formel I und einen basischen Farbstoff der Formel II, wobei jeweils in Formel I und Formel II
- R¹: Wasserstoff, Chlor oder Brom,
- R²: Wasserstoff,
- R³: C₁-C₃-Alkyl und
- R⁴: Cyano, Carbamoyl oder Acetyl bedeuten, und
weiterhin in Formel I
- R⁵: Wasserstoff und
- R⁶: Wasserstoff, Chlor, Brom, Methyl, Methoxy oder Nitro, und in Formel II
- X¹: Wasserstoff oder den Rest L-A und
- X²: Wasserstoff, Chlor, Brom, Methyl, Methoxy, Nitro oder den Rest L-A bedeuten, wobei L und A jeweils die obengenannte Bedeutung besitzen.

Weiterhin besonders bevorzugt sind Farbmittelmischungen, die einen basischen Farbstoff der Formel II enthalten, in der nur X¹ für den Rest L-A steht.

Die Pigmente der Formel I und/oder die basischen Farbstoffe der Formel II können in den neuen Farbmittelmischungen auch als Mischungen vorliegen.

Die erfindungsgemäßen Farbmittelmischungen enthalten in der Regel 75 bis 98 Mol-%, vorzugsweise 85 bis 95 Mol-%, eines Pigments der Formel I oder Gemische davon und 25 bis 2 Mol-%, vorzugsweise 15 bis 5 Mol-%, eines basischen Farbstoffs der Formel II oder Gemische davon, jeweils bezogen auf die Gesamtmolmasse von Pigment und Farbstoff.

Die Herstellung der neuen Farbmittelmischungen erfolgt nach an sich bekannten Methoden, z.B. durch Mischen der wasserfeuchten Presskuchen von Pigment I und Farbstoff II oder auch Trockenmischung von Pigment I und Farbstoff II.

Vorzugsweise erfolgt die Herstellung der erfindungsgemäßen Farbmittelmischungen jedoch durch Mischkupplung. Für die Herstellung der besonders bevorzugten Farbmittelmischungen, die einen basischen Farbstoff der Formel II enthalten, in der nur X¹ für den Rest L-A steht, bedeutet dies z.B., daß man das jeweilige Phenyloxdiazolylanilin diazotiert und anschließend mit einer Mischung kuppelt, die die Kupplungskomponenten enthält, die dem Pigment I und dem Farbstoff II zugrundeliegen.

Die Diazotierung des Phenyloxdiazolylanilins kann z.B. gemäß den Angaben der DE-A-2 457 687 mit Nitrosylschwefelsäure in Schwefelsäure erfolgen. Eine weitere Möglichkeit besteht beispielsweise darin, ein gemäß der älteren deutschen Patentanmeldung P 39 05 242.7 erhaltenes Phenyloxdiazolylanilin mit Natriumnitrit in Salzsäure zu diazotieren.

Farbmittelmischungen, die besonders bevorzugt sind, enthalten weiterhin noch ein Dispergierhilfsmittel. Der Gehalt an Dispergierhilfsmittel beträgt im allgemeinen 5 bis 50 Gew.%, vorzugsweise 10 bis 35 Gew.%, und insbesondere 10 bis 25 Gew.%, jeweils bezogen auf das Gesamtgewicht an Pigment I und Farbstoff II.

Bei den Dispergierhilfsmitteln handelt es sich um an sich bekannte Stoffe, wie Harze oder deren Derivate oder oberflächenaktive Mittel.

Geeignete Dispergierhilfsmittel sind z.B. solche, auf Basis von natürlichen oder synthetischen Harzen. Zu diesen Harzen gehören insbesondere Harzsäuren, wie Abietinsäure, Pimarsäure oder deren Gemische oder Kolophonium, in dem diese Harzsäuren enthalten sind.

Die Harzsäuren können auch modifiziert sein, z.B. durch Hydrierung, Disproportionierung, Dismutation, Polymerisation, Umsetzung mit Malein- oder Fumarsäure oder durch Umsetzung mit Polyalkoholen, wie Glycerin, Pentaerythrit oder Alkylenglykolen.

Modifizierte Harzsäuren sind weiterhin z.B. Malein- oder Fumarsäureaddukte, die mit Polyolen, wie Glycerin oder Pentaerythrit teilweise verestert wurden, oder Umsetzungsprodukte von Harzen oder maleinierten Harzen mit Phenolderivaten oder Kondensationsprodukten aus Formaldehyd und Phenol.

Des weiteren kommen als Dispergierhilfsmittel z.B. Metallsalze von Harzen, wie Resinate von Calcium, Barium, Aluminium, Zink oder Zirkonium in Betracht. Die Dispergierhilfsmittel auf Basis von Harzen sind z.B. in Ullmanns Encyklopädie der technischen Chemie, 4. Auflage, Band 12, Seiten 525 bis 537, beschrieben.

Durch die zusätzliche Anwesenheit eines Dispergierhilfsmittels wird eine besonders gute Dispergierbarkeit der neuen Farbmittelmischungen gewährleistet.

Die erfindungsgemäßen Farbmittelmischungen finden vorteilhaft Anwendung in Druckfarben, insbesondere in Flushpasten oder Offset-Druckfarben. Dazu werden sie in üblicher Weise in die Druckfarben eingearbeitet.

Die folgenden Beispiele sollen die Erfindung näher erläutern.
I Herstellung einer Offsetfarbe
   Zur Herstellung einer Offsetfarbe, die 12 Gew.% an Pigment enthält, wurde jeweils eine entsprechende Menge an Pigment in einem Firnis aus 40 Gew.-Teilen Alresat® SKA (Fa. Albert, Wiesbaden), 20 Gew.-Teilen Lackleinöl und 40 Gew.-Teilen Mineralöl PKWF 6/9 (Fa. Haltermann, Hamburg) eingerührt und anschließend mit dem Dispermat-Dissolver (Zahnscheibe ⌀ 3 cm, 12 000 U/min) 10 Minuten bei 70°C vordispergiert. Anschließend wurde die Farbe auf dem auf 35°C temperierten Bühlerwalzenstuhl SDY 200 dreimal bei 10 bar angerieben.
II Bestimmung der Lasur
   Die Offsetfarbe wurde auf dem Tellerreiber (Engelmann) mit Alkydal® F 681 (Fa. Bayer, Leverkusen) - 75 gew.%ig in Benzin - bei 25 kg Belastung auf 10 Gew.% Pigmentgehalt verdünnt und gemischt. Die Mischung wurde mit dem Erichsen-Filmziehgerät in 100 »m Schichtdicke auf Kontrastkarton (schwarz-weiß) aufgetragen, wobei der Mischung auf der Reibplatte unmittelbar vor dem Auftrag ca. 8 Tropfen Trockenstoff "Octa Soligen Kobalt (1,7 %), Blei (15,7 %) flüssig" (Hoechst) zugemischt wurden. Die Lasur wurde visuell über Schwarz abgemustert (5 höchster Wert) und als Streu-ΔE mit dem Farbmeßgerät RFC 16 (Fa. Zeiss) gemessen (d/8°).

### Beispiel 1

590 g 2-(3-Phenyl-1,2,4-oxdiazol-5-yl)anilin (erhalten gemäß Beispiel 2 der älteren deutschen Patentanmeldung P 39 05 242.7) wurden in 7 l Wasser und 0,8 l konz. Salzsäure auf 90°C erwärmt. Man ließ auf Raumtemperatur abkühlen und dispergierte 12 Stunden bei dieser Temperatur nach. Anschließend kühlte man mit Eis auf 10°C ab und diazotierte mit 0,7 l einer 23 gew.%igen wäßrigen Natriumnitritlösung. Nach 3 Stunden Rühren entfernte man den Nitritüberschuß mit Amidosulfonsäure und versetzte die Mischung mit 349 g 3-Cyano-6-hydroxy-4-methylpyrid-2-on in 4,2 l Wasser und 150 ml 50 gew.%iger Natronlauge sowie mit 47 g eines extern basischen Pyridons der Formel 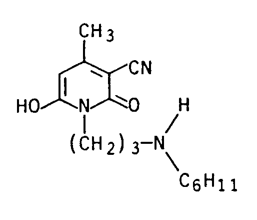
in 100 ml verd. Salzsäure. Anschließend wurde auf 95°C erwärmt und eine Stunde bei dieser Temperatur nachgerührt. Die resultierende Suspension wurde dann isoliert, gewaschen und bei 70°C getrocknet. Man erhielt 982 g eines gelben Farbstoffs.

### Vergleichsbeispiel 1

Es wurde das im Beispiel 1 der DE-A-2 457 687 beschriebene Pigment der Formel 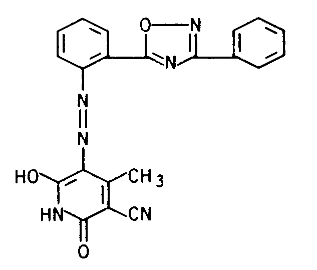
entsprechend der dort genannten Vorschrift hergestellt. Jedoch wurde vor der Isolierung eine Stunde bei 40°C nachgerührt, abgesaugt, gewaschen und bei 65°C getrocknet.

### Vergleichsbeispiel 2

590 g 2-(3-Phenyl-1,2,4-oxdiazol-5-yl)anilin (erhalten gemäß Beispiel 2 der älteren deutschen Patentanmeldung P 39 05 242.7) wurden in 7 l Wasser und 0,8 l konz. Salzsäure auf 90°C erwärmt. Man ließ auf Raumtemperatur abkühlen und dispergierte 12 Stunden bei dieser Temperatur nach. Anschließend kühlte man mit Eis auf 10°C ab und diazotierte mit 0,7 l einer 23 gew.%igen wäßrigen Natriumnitrilösung. Nach 3 Stunden Rühren entfernte man den Nitritüberschuß mit Amidosulfonsäure und versetzte die Mischung mit 373 g 3-Cyano-6-hydroxy-4-methylpyrid-2-on in 4,5 l Wasser und 160 ml 50 gew.%iger Natronlauge.

Es wurde auf 40°C erwärmt und eine Stunde bei dieser Temperatur nachgerührt. Anschließend saugte man das Pigment ab, wusch mit Wasser und trocknete bei 65°C. Man erhielt 952 g eines gelben Pigments.

Eine Offset-Druckfarbe aus einem nach Beispiel 1 hergestellten Pigment ist deutlich farbstärker als eine Offsetfarbe aus entsprechenden Mengen eines Pigments aus dem Vergleichsbeispiel 1 oder 2.

### Beispiel 2

Man verfuhr analog Beispiel 1, jedoch wurde die resultierende Suspension nach Erwärmen auf 95°C mit Natronlauge auf einen pH-wert von 9,5 gestellt. Man ließ 226 g Kolophonium (als 10 gew.%ige Lösung in verd. Natronlauge) zulaufen und rührte eine Stunde bei 95°C nach. Anschließend stellte man mit verd. Salzsäure auf einen pH-Wert von 5 und ließ auf Raumtemperatur abkühlen. Nach Isolieren, Waschen und Trocknen bei 65°C erhielt man 1215 g einer gelben Pigmentzubereitung.

Eine aus der Pigmentzubereitung hergestellte Offsetfarbe ist farbstärker als eine entsprechend aus einem Pigment des Vergleichsbeispiels 1 oder 2 hergestellte Farbe. Die Pigmentzubereitung ist deutlich besser dispergierbar als die Pigmente aus den Vergleichsbeispielen 1 und 2 und besitzt eine höhere Lasur (Tab.)

### Beispiel 3

Man verfuhr analog Beispiel 2, jedoch verwendete man 339 g Kolophonium. Man erhielt 1296 g einer gelben Pigmentzubereitung.

Eine Offsetfarbe aus der Pigmentzubereitung des Beispiels 3 ist in der Dispergierbarkeit und in der Lasur (Tab.) den Pigmenten aus den Vergleichsbeispielen 1 und 2 deutlich überlegen.

### Beispiel 4

590 g 2-(3-Phenyl-1,2,4-oxdiazol-5-yl)anilin wurden wie in Vergleichsbeispiel 1 beschrieben, diazotiert. Nach Zerstören des Nitritüberschusses mit Amidosulfonsäure versetzte man das Reaktionsgemisch mit 358 g 3-Cyano-6-hydroxy-4-methylpyrid-2-on in 4,3 l Wasser und 155 ml 50 gew.%iger Natronlauge sowie mit 36 g eines Pyridons der Formel 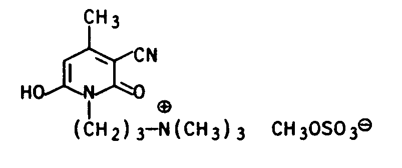
in Wasser. Anschließend wurde auf 80 °C erwärmt, mit 50 gew.%iger Natronlauge auf einen pH-wert von 9,5 gestellt und mit 226 g Kolophonium (als 10 gew.%ige Lösung in Natronlauge) versetzt. Man rührte eine Stunde bei 80 °C, stellte mit Salzsäure auf einen pH-wert von 5 und ließ auf Raumtemperatur abkühlen. Nach Absaugen, Waschen und Trocknen bei 65 °C erhielt man 1192 g einer gelben Pigmentzubereitung.

Eine Offsetfarbe aus der Pigmentzubereitung des Beispiels 4 ist in der Dispergierbarkeit sowie in der Lasur (Tab.) den Pigmenten aus den Vergleichsbeispielen 1 und 2 deutlich überlegen.

### Beispiel 5

590 g 2-(3-Phenyl-1,2,4-oxdiazol-5-yl)anilin wurden entsprechend Beispiel 1 der DE-A 2 457 687 diazotiert. Nach Zerstörung des Nitritüberschusses mit Amidosulfonsäure versetzte man das Reaktionsgemisch mit 358 g 3-Cyano-6-hydroxy-4-methylpyrid-2-on in 4,3 l wasser und 135 ml 50 gew.%iger Natronlauge sowie mit 43 g eines Pyridons der Formel 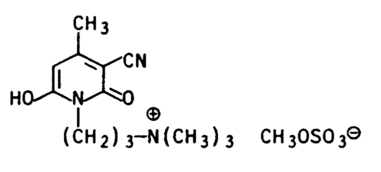
in Wasser. Anschließend erwärmte man auf 80 °C und rührte eine Stunde bei 80 °C nach.

Das Pigment wurde abgesaugt, gewaschen und in 3,5 l Wasser bei 80 °C dispergiert. Man ließ 226 g Kolophonium (als 10 gew.%ige Lösung in Natronlauge) zulaufen, rührte eine Stunde bei dieser Temperatur und stellte mit verd. Schwefelsäure auf einen pH-wert von 5. Es wurde 2 Stunden bei 80 °C nachgerührt. Nach Abkühlen auf Raumtemperatur wurde der Feststoff abgesaugt, gewaschen und bei 65 °C getrocknet. Man erhielt 1162 g einer gelben Pigmentzubereitung.

Eine Offsetfarbe aus der Pigmentzubereitung des Beispiels 5 ist in der Dispergierbarkeit den Pigmenten der Vergleichsbeispiele 1 und 2 deutlich überlegen. Entsprechendes gilt für die Lasur (Tab.).

### Beispiel 6

590 g 2-(3-Phenyl-1,2,4-oxdiazol-5-yl)anilin wurden entsprechend Beispiel 1 der DE-A 2 457 687 diazotiert. Nach Zerstörung des Nitritüberschusses mit Amidosulfonsäure versetzte man die Suspension mit 349 g 3-Cyano-6-hydroxy-4-methylpyrid-2-on in 4,2 l Wasser und 150 ml 50 gew.%iger Natronlauge sowie mit 47 g eines extern basischen Pyridons der Formel 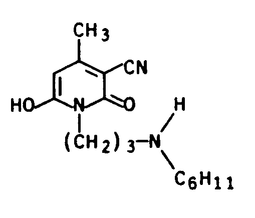
in 100 ml verd. Salzsäure. Anschließend erwärmte man auf 80 °C, rührte 1 Stunde bei dieser Temperatur nach, saugte das Pigment ab und wusch mit Wasser.

Das Pigment wurde anschließend in 35 l Wasser bei 95 °C dispergiert. Man versetzte die Suspension mit 226 g Kolophonium (als 10 gew.%ige Lösung in Natronlauge), rührte eine Stunde bei 95 °C nach und stellte mit verd. Schwefelsäure auf einen pH-wert von 5. Nach Abkühlen auf Raumtemperatur wurde der Feststoff abgesaugt, gewaschen und bei 65 °C getrocknet. Man erhielt 1200 g einer gelben Pigmentzubereitung.

Die aus der Pigmentzubereitung des Beispiels 6 hergestellte Offsetfarbe ist farbstärker als die mit den Pigmenten der Vergleichsbeispiele 1 und 2 entsprechend hergestellten Farben. Die Zubereitung ist deutlich besser dispergierbar als die Pigmente der Vergleichsbeispiele 1 und 2. Die Lasur (Tab.) ist ebenfalls besser als in den Vergleichsbeispielen.

**Tabelle**

| Beispiel Nr. | Lasur | |
|---|---|---|
| | vis. | Streu-ΔE |
| Vergleich 1 | Vergl. | 64,2 |
| Vergleich 2 | Vergl. | 64,4 |
| 1 | - 1 | 68,9 |
| 2 | + 5 | 49,7 |
| 3 | + 4 | 51,2 |
| 4 | + 4 | 53,2 |
| 5 | + 4 | 52,7 |
| 6 | + 4 | 53,0 |

## Patentansprüche

1. Farbmittelmischungen, enthaltend ein Pigment der Formel I 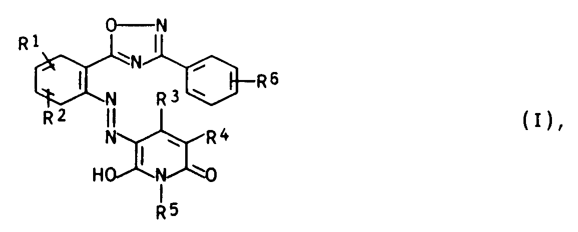 in der
R¹ Wasserstoff, Halogen, C₁-C₄-Alkyl, C₁-C₄-Alkoxy, Trifluormethyl oder Nitro,
R² Wasserstoff, Halogen oder Nitro,
R³ Wasserstoff oder C₁-C₄-Alkyl,
R⁴ Cyano, Carbamoyl oder Acetyl,
R⁵ Wasserstoff, C₁-C₁₀-Alkyl, das gegebenenfalls durch Hydroxy substituiert und/oder durch ein oder zwei Sauerstoffatome unterbrochen ist, oder C₅-C₇-Cycloalkyl und
R⁶ Wasserstoff, Halogen, C₁-C₄-Alkyl, C₁-C₄-Alkoxy oder Nitro bedeuten, und
einen basischen Farbstoff der Formel II 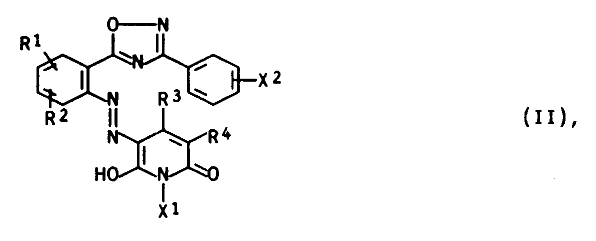 in der
R¹, R², R³ und R⁴ jeweils die obengenannte Bedeutung besitzen und
X¹ Wasserstoff, C₁-C₁₀-Alkyl, das gegebenenfalls durch Hydroxy substituiert und/oder durch ein oder zwei Sauerstoffatome unterbrochen ist, C₅-C₇-Cycloalkyl oder den Rest L-A, in dem L für geradkettiges oder verzweigtes C₁-C₆-Alkylen und A für einen aminogruppenhaltigen Rest stehen, und
X² Wasserstoff, Halogen, C₁-C₄-Alkyl, C₁-C₄-Alkoxy, Nitro oder den Rest L-A, in dem L und A jeweils die obengenannte Bedeutung besitzen, bedeuten,
mit der Maßgabe, daß mindestens einer beiden Reste X¹ und X², für den Rest L-A steht.

2. Farbmittelmischungen gemäß Anspruch 1, dadurch gekennzeichnet, daß jeweils in Formel I und Formel II
R¹ Wasserstoff, Chlor, Brom, Methyl, Methoxy, Trifluormethyl oder Nitro,
R² Wasserstoff, Chlor, Brom oder Nitro,
R³ Wasserstoff oder C₁-C₃-Alkyl und
R⁴ Cyano, Carbamoyl oder Acetyl bedeuten, und
daß weiterhin in Formel I
R⁵ Wasserstoff, C₁-C₄-Alkyl oder C₅-C₇-Cycloalkyl und
R⁶ Wasserstoff, Chlor, Brom, Methyl, Methoxy oder Nitro, und in
Formel II
X¹ Wasserstoff, C₁-C₄-Alkyl oder den Rest L-A und
X² Wasserstoff, Chlor, Brom, Methyl, Methoxy, Nitro oder den Rest L-A bedeuten, wobei L und A jeweils die in Anspruch 1 genannte Bedeutung besitzen.

3. Farbmittelmischungen gemäß Anspruch 1, dadurch gekennzeichnet, daß jeweils in Formel I und Formel II
R¹ Wasserstoff, Chlor oder Brom,
R² Wasserstoff,
R³ C₁-C₃-Alkyl und
R⁴ Cyano, Carbamoyl oder Acetyl bedeuten, und
daß weiterhin in Formel I
R⁵ Wasserstoff und
R⁶ Wasserstoff, Chlor, Brom, Methyl, Methoxy oder Nitro, und in
Formel II
X¹ Wasserstoff oder den Rest L-A und
X² Wasserstoff, Chlor, Brom, Methyl, Methoxy, Nitro oder den Rest L-A bedeuten, wobei L und A jeweils die in Anspruch 1 genannte Bedeutung besitzen.

4. Farbmittelmischungen gemäß Anspruch 1, dadurch gekennzeichnet, daß nur X¹ für den Rest L-A steht.

5. Farbmittelmischungen gemäß Anspruch 1, dadurch gekennzeichnet, daß sie 75 bis 98 Mol-% eines Pigments der Formel I oder Gemische davon und 25 bis 2 Mol-% eines basischen Farbstoffs der Formel II oder Gemische davon, jeweils bezogen auf die Gesamtmolmasse von Pigment und Farbstoff, enthalten.

6. Verwendung der Farbmittelmischungen gemäß Anspruch 1 in Druckfarben.

## Claims

1. A colorant mixture containing a pigment of the formula I 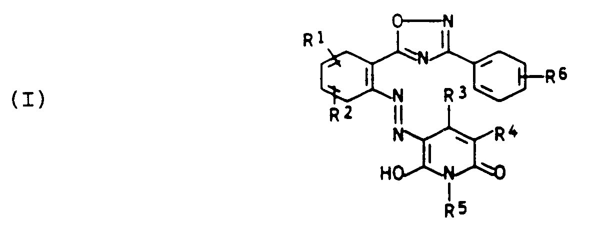 where
R¹ is hydrogen, halogen, C₁-C₄-alkyl, C₁-C₄-alkoxy, trifluoromethyl or nitro,
R² is hydrogen, halogen or nitro,
R³ is hydrogen or C₁-C₄-alkyl,
R⁴ is cyano, carbamoyl or acetyl,
R⁵ is hydrogen, C₁-C₁₀-alkyl, which may be substituted by hydroxyl and/or interrupted by one or two oxygen atoms, or C₅-C₇-cycloalkyl and
R⁶ is hydrogen, halogen, C₁-C₄-alkyl, C₁-C₄-alkoxy or nitro, and
a basic dye of the formula II 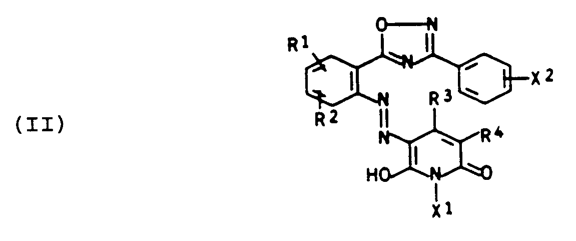 where
R¹, R², R³ and R⁴ are each as defined above,
X¹ is hydrogen, C₁-C₁₀-alkyl, which may be substituted by hydroxyl and/or interrupted by one or two oxygen atoms, C₅-C₇-cycloalkyl or the radical L-A, where L is straight-chain or branched C₁-C₆-alkylene and A is an amino-containing radical, and
X² is hydrogen, halogen, C₁-C₄-alkyl, C₁-C₄-alkoxy, nitro or the radical L-A, where L and A are each as defined above,
with the proviso that at least one of X¹ and X² is L-A.

2. A colorant mixture as claimed in claim 1, wherein in both the formula I and the formula II
R¹ is hydrogen, chlorine, bromine, methyl, methoxy, trifluoromethyl or nitro,
R² is hydrogen, chlorine, bromine or nitro,
R³ is hydrogen or C₁-C₃-alkyl and
R⁴ is cyano, carbamoyl or acetyl, and
in the formula I only
R⁵ is hydrogen, C₁-C₄-alkyl or C₅-C₇-cycloalkyl and
R⁶ is hydrogen, chlorine, bromine, methyl, methoxy or nitro, and in the the formula II only
X¹ is hydrogen, C₁-C₄-alkyl or the radical L-A and
X² is hydrogen, chlorine, bromine, methyl, methoxy, nitro or L-A, where L and A are each as defined as in claim 1.

3. A colorant mixture as claimed in claim 1, wherein in both the formula I and the formula II
R¹ is hydrogen, chlorine or bromine,
R² is hydrogen,
R³ is C₁-C₃-alkyl and
R⁴ is cyano, carbamoyl or acetyl, and
in the formula I only
R⁵ is hydrogen and
R⁶ is hydrogen, chlorine, bromine, methyl, methoxy or nitro, and in the formula II only
X¹ is hydrogen or L-A and
X² is hydrogen, chlorine, bromine, methyl, methoxy, nitro or L-A, where L and A are each as defined in claim 1.

4. A colorant mixture as claimed in claim 1, wherein only X¹ is L-A.

5. A colorant mixture as claimed in claim 1, containing 75-98 mol% of a pigment of the formula I or a mixture thereof and 25-2 mol% of a basic dye of the formula II or a mixture thereof, each percentage based on the total molar amount of pigment and dye.

6. The use of a colorant mixture as claimed in claim 1 in a printing ink.

## Revendications

1. Mélanges de matières colorantes, contenant un pigment de formule I 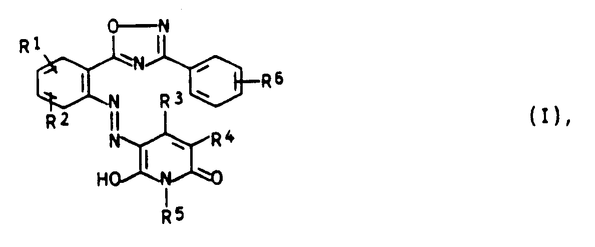 dans laquelle
R¹ représente un atome d'hydrogène, d'halogène ou un reste alkyle en C₁-C₄, alcoxy en C₁-C₄, trifluorométhyle ou nitro,
R² représente un atome d'hydrogène, d'halogène ou un groupement nitro,
R³ représente un atome d'hydrogène ou un reste alkyle en C₁-C₄,
R⁴ représente un groupement cyano, carbamoyle ou acétyle,
R⁵ représente un atome d'hydrogène, un reste alkyle en C₁-C₁₀ qui est éventuellement substitué par un groupement hydroxy et/ou interrompu par un ou deux atomes d'oxygène, ou un reste cycloalkyle en C₅-C₇, et
R⁶ représente un atome d'hydrogène, d'halogène ou un reste alkyle en C₁-C₄, alcoxy en C₁-C₄ ou nitro, et
un colorant basique de formule II 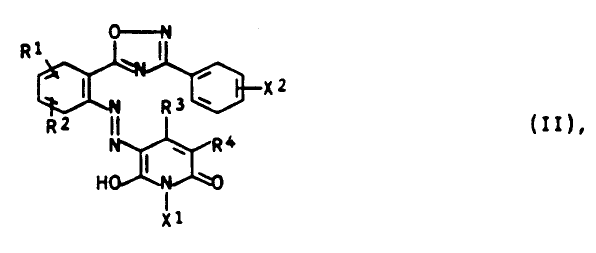 dans laquelle
R¹, R², R³ et R⁴ ont chacun la signification donnée ci-dessus,
X¹ représente un atome d'hydrogène, un reste alkyle en C₁-C₁₀ qui est éventuellement substitué par un groupement hydroxy et/ou interrompu par un ou deux atomes d'oxygène, un reste cycloalkyle en C₅-C₇ ou le reste L-A, dans lequel L est mis pour un reste alkylène en C₁-C₆ à chaîne droite ou ramifiée et A est mis pour un reste contenant des groupements amino, et
X² représente un atome d'hydrogène, d'halogène, un reste alkyle en C₁-C₄, alcoxy en C₁-C₄ ou le reste L-A, dans lequel L et A ont chacun la signification donnée ci-dessus,
étant spécifié que l'un au moins des deux restes X¹ et X² est mis pour le reste L-A.

2. Mélanges de matières colorantes selon la revendication 1, caractérisés en ce que, dans chacune des formules I et II,
R¹ représente un atome d'hydrogène, de chlore, de brome ou un reste méthyle, méthoxy, trifluorométhyle ou nitro,
R² représente un atome d'hydrogène, de chlore, de brome ou un groupement nitro,
R³ représente un atome d'hydrogène ou un reste alkyle en C₁-C₃,
R⁴ représente un groupement cyano, carbamoyle ou acétyle, et
en ce qu'en outre, dans la formule I,
R⁵ représente un atome d'hydrogène ou un reste alkyle en C₁-C₄ ou cycloalkyle en C₅-C₇ et
R⁶ représente un atome d'hydrogène, de chlore, de brome ou un reste méthyle, méthoxy ou nitro, et
dans la formule II,
X¹ représente un atome d'hydrogène, un reste alkyle en C₁-C₄ ou le reste L-A et
X² représente un atome d'hydrogène, de chlore, de brome, un reste méthyle, méthoxy, nitro ou le reste L-A, L et A ayant chacun la signification donnée dans la revendication 1.

3. Mélanges de matières colorantes selon la revendication 1, caractérisés en ce que, dans chacune des formules I et II,
R¹ représente un atome d'hydrogène, de chlore ou de brome,
R² représente un atome d'hydrogène,
R³ représente un reste alkyle en C₁-C₃,
R⁴ représente un groupement cyano, carbamoyle ou acétyle, et
en ce qu'en outre, dans la formule I,
R⁵ représente un atome d'hydrogène et
R⁶ représente un atome d'hydrogène, de chlore, de brome ou un reste méthyle, méthoxy ou nitro, et
dans la formule II,
X¹ représente un atome d'hydrogène ou le reste L-A et
X² représente un atome d'hydrogène, de chlore, de brome, un reste méthyle, méthoxy, nitro ou le reste L-A, L et A ayant chacun la signification donnée dans la revendication 1.

4. Mélanges de matières colorantes selon la revendication 1, caractérisés en ce que X¹ est seul à être mis pour le reste L-A.

5. Mélanges de matières colorantes selon la revendication 1, caractérisés en ce qu'ils contiennent 75 à 98% en moles d'un pigment de formule I ou d'un mélange de tels pigments et 25 à 2% en moles d'un colorant basique de formule II ou de mélanges de tels colorants, chaque fois par rapport à la masse molaire totale de pigment et de colorant.

6. Utilisation des mélanges de matières colorantes selon la revendication 1 dans des encres d'imprimerie.
